# EUROPEAN PATENT APPLICATION

(11) **EP 2 701 046 A1**
(43) Date of publication of application: **26.02.2014**
(21) Application number: 12774769.9
(22) Date of filing: 18.04.2012
(51) Int. Cl.: G06F 3/048, G09G 5/00, G09G 5/36, H04M 1/247

(54) **INFORMATION DISPLAY DEVICE, CONTROL METHOD, AND PROGRAM**

(30) Priority: 20.04.2011 JP 2011093811
(71) Applicant: NEC CASIO Mobile Communications, Ltd., Kawasaki-shi Kanagawa 211-8666 (JP)
(72) Inventor: YOSHIOKA Kenji, Kawasaki-shi, Kanagawa 211-8666 (JP)
(74) Representative: Vossius & Partner
(86) International application number: PCT/JP2012/060479
(87) International publication number: WO 2012/144526

(57) **Abstract**

An information display device includes: an orientation change degree computation unit that computes a degree of change of a state of orientation detected by an orientation detection unit; an orientation change degree determination unit that determines whether the degree of change of the state of orientation of the information display device computed by the orientation change degree computation unit is equal to or more than a threshold; an image capture unit controller that activates the imaging unit upon the orientation change degree determination unit determining that the degree of change of the state of orientation of the information display device is equal to or more than the threshold; a face detection unit that detects a person's face in an image obtained by imaging of the imaging unit; a face direction specification unit that specifies a vertical orientation of the person's face detected by the face detection unit; a display direction determination unit that determines whether a vertical orientation of a screen display that is displayed on a display unit is the same orientation as the vertical orientation of the person's face specified by the face direction specification unit; and a display direction switch unit that switches the vertical orientation of the screen display that is displayed on the display unit to the same orientation as the vertical orientation of the person's face upon the display direction determination unit determining that the vertical orientation of the screen display that is displayed on the display unit and the vertical orientation of the person's face are not the same orientation.

## Description

### TECHNICAL FIELD

The present invention relates to an information display device, a control method, and a program. In particular, the present invention relates to an information display device that switches the orientation of a screen display of information and displays the information according to the orientation of a person's face, a control method that controls the information display device thereof, and a program for the information display device thereof.

### BACKGROUND ART

Smartphones are able to display various content, such as websites, photographs, and documents. Such content, depending on the shape thereof or the amount of information, is divided into content that is more easily browsed when displayed in portrait, and content that is more easily browed when displayed in landscape. For example, for websites in which long text is written, in a case where the long side direction of a rectangular display is displayed as the vertical direction, since the number of characters that fit in the width of the display is small, the scroll width in the vertical direction becomes large. Therefore, in a case where websites in which long text is written are displayed, if the font size is made small, since the number of characters that fit in the width of the display increases, the scroll in the vertical direction becomes short. However, methods that make the font small in this manner sacrifice the visibility.

Many smartphones, in order to address the problems of the manner mentioned above, switch the orientation of the screen display that is shown on the display to the same orientation as the vertical orientation of the smartphone body. Generally, the vertical orientation of the smartphone body is identified by the orientation of the gravitational acceleration detected by an acceleration sensor.

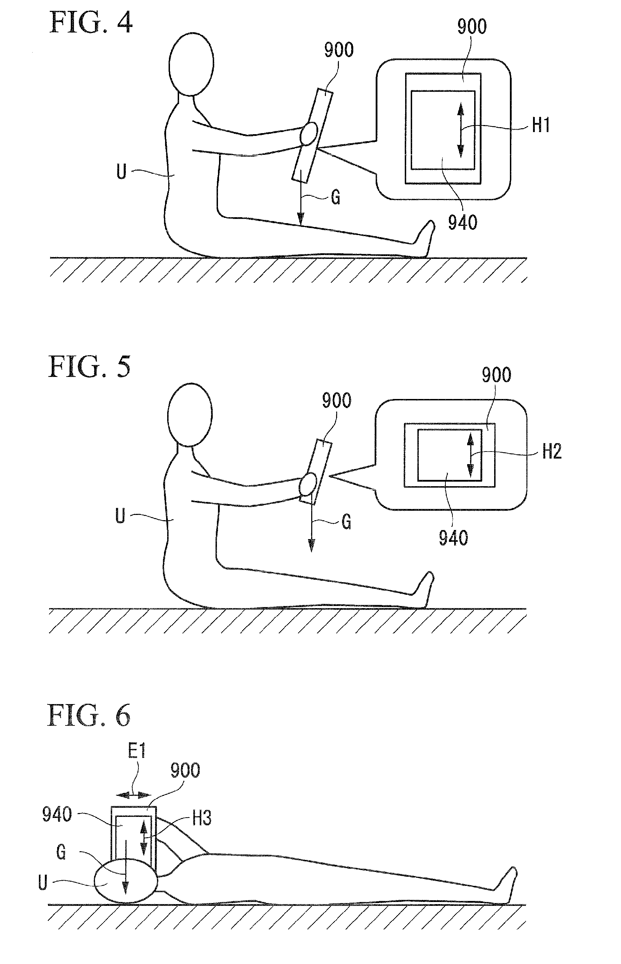

FIG. 4 to FIG. 8 represent an example of a usage state of a smartphone 900 of a related technology. FIG. 4 represents a situation in which a user U is gripping the smartphone 900 in an attempt to perform viewing with the long side direction of a rectangular display 940 of the smartphone 900 as the vertical direction. The smartphone 900 displayed within the balloon of FIG. 4 represents a state that is viewed from the direction in which the user is viewing the display 940. In the case of this example, the smartphone 900 receives a gravitational acceleration G in substantially the same direction as the orientation of the long side direction of the display 940. Therefore, the smartphone 900 performs screen display with the long side direction H1 of the display 940 as the vertical direction.

FIG. 5 represents a situation where the user U is gripping the smartphone 900 in an attempt to perform viewing with the short side direction of the rectangular display 940 of the smartphone 900 as the vertical direction. The smartphone 900 displayed within the balloon of FIG. 5 represents a state that is viewed from the direction in which the user is viewing the display 940. In the case of this example, the smartphone 900 receives a gravitational acceleration G in substantially the same direction as the orientation of the short side direction of the display 940. Therefore, the smartphone 900 performs screen display with the short side direction of the display 940 as the vertical direction. That is to say, in a case where the way of holding the smartphone 900 is changed from the state as shown in FIG. 4 to the state as shown in FIG. 5, the orientation of the screen display is switched from a screen display in which the long side direction H1 of the display 940 is the vertical direction to a screen display in which the short side direction H2 of the display 940 is the vertical direction.

FIG. 6 represents a situation where the user U is lying down in a state gripping the smartphone 900. In the case of this example, the smartphone 900 receives a gravitational acceleration G in substantially the same direction as the orientation of the long side direction of the display 940. Therefore, the smartphone 900 performs screen display with the long side direction of the display 940 as the vertical direction. That is to say, in a case where the orientation of the user is changed from the state as shown in FIG. 5 to the state as shown in FIG. 6, the smartphone 900 switches the orientation of the screen display from a screen display in which the short side direction H2 of the display 940 is the vertical direction to a screen display in which the long side direction H3 of the display 940 is the vertical direction. However, in this example, for the user, the information for which screen display is performed is easier to view when screen display is performed with the same direction E1 as the vertical direction of the parietal region of the face to the neck as the vertical direction of the display 940. On the other hand, information for which screen display is performed with the long side direction H3 as the vertical direction, in which the angle differs to the direction thereof by 90°, is difficult to view.

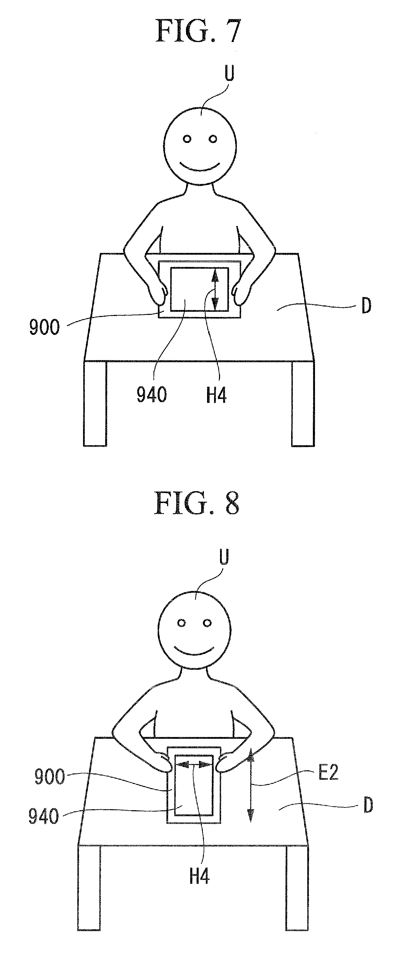

FIG. 7 represents a situation where the user U has placed the smartphone 900 on a desk D in an attempt to perform viewing with the short side direction of the rectangular display 940 of the smartphone 900 as the vertical direction. In the case of this example, the smartphone 900, immediately before being placed on the desk D, receives a gravitational acceleration G in substantially the same direction as the orientation of the short side direction of the display 940. Therefore, the smartphone 900, immediately before being placed on the desk D, performs screen display with the short side direction H4 of the display 940 as the vertical direction. Further, the smartphone 900, after being placed on the desk D, receives a gravitational acceleration G in a direction from the front side of the display 940 toward the rear side. Therefore, since the smartphone 900 does not come under a gravitational acceleration G in the same direction as the short side or the long side direction of the display 940, it does not change from before being placed on the desk D, and screen display is performed with the short side direction H4 of the display 940 as the vertical direction.

FIG. 8 represents a situation where the user U has placed the smartphone 900 on the desk D in an attempt to perform viewing with the long side direction of the rectangular display 940 of the smartphone 900 as the vertical direction. In the case of this example, the smartphone 900 receives a gravitational acceleration G in a direction from the front side of the display 940 toward the rear side. Therefore, the smartphone 900 is such that, even if the orientation is changed from a state such as shown in FIG. 7 to a state such as shown in FIG. 8 while being placed on the desk D, in the same manner as before the orientation is changed, screen display is performed with the short side direction H4 of the display 940 as the vertical direction. However, in this example, for the user, the information for which screen display is performed is easier to view when screen display is performed with the same direction E2 as the vertical direction of the parietal region of the face to the neck as the vertical direction of the display 940. On the other hand, information for which screen display is performed with the long side direction H4 as the vertical direction, in which the angle differs to the direction thereof by 90°, is difficult to view.

Patent Document 1 and Patent Document 2 disclose portable terminal devices that may solve the problems mentioned above. The portable terminal device described in Patent Document 1 images the user and acquires image information. The portable terminal device acquires facial information by recognizing the facial structure of the user from the acquired image information. The portable terminal device, based on the acquired facial information of the user, detects the orientation of the housing of the portable terminal device with respect to the user during utilization. The portable terminal device, based on the detected orientation of the housing, switches the display of the image content to the display unit.

In this manner, the portable terminal device described in Patent Document 1 appropriately grasps the orientation ofthe portable terminal device with respect to the user during utilization, is able to switch the screen display without performing a notification operation, and is able to arbitrarily switch the screen display during viewing of the displayed image content in real time.

The screen switching device described in Patent Document 2 photographs the face. The screen switching device displays the image of the photographed face on a rectangular display unit. The screen switching device determines either the horizontal side or the vertical side of the display unit as the axis that is made the basis of the display direction. The screen switching device performs authentication of the face displayed on the display unit. The screen switching device switches to a screen determined based on the direction faced by the axis of the display unit, on which the authenticated face is displayed. The screen switching device performs displays including television images and video telephone images on the switched screen.

In this manner, in the screen switching device described in Patent Document 2, screen switching becomes possible by detecting the relative position of the display unit and the user's face regardless of the state of the mobile phone in which the display unit is provided. This screen switching device, by performing an appropriate screen display, is anticipated to improve the user-friendliness.

### [Prior Art Documents]

### [Patent Documents]

[Patent Document 1] Japanese Unexamined Patent Application, First Publication No. 2009-130816
[Patent Document 2] Japanese Unexamined Patent Application, First Publication No.2009-171259

### SUMMARY OF THE INVENTION

### Problem to be Solved by the Invention

The technologies described in Patent Documents 1 and 2 are technologies that switch the orientation of the screen display that is displayed on a screen according to the orientation of the user's face photographed by means of a camera. However, if the technologies described in Patent Documents 1 and 2 are used, although the orientation of the screen display can be switched to an orientation that is easily viewed by the user, the camera must be always activated, and the power consumption becomes large. Consequently, in the technologies described in Patent Documents 1 and 2, it is difficult to say that they are suitable for portable information terminals, such as smartphones, that demand long-time driving by a battery.

### Means for Solving the Problem

An information display device according to a first aspect of the present invention includes: an orientation change degree computation unit that computes a degree of change of a state of orientation detected by an orientation detection unit; an orientation change degree determination unit that determines whether the degree of change of the state of orientation of the information display device computed by the orientation change degree computation unit is equal to or more than a threshold; an image capture unit controller that activates the imaging unit upon the orientation change degree determination unit determining that the degree of change of the state of orientation of the information display device is equal to or more than the threshold; a face detection unit that detects a person's face in an image obtained by imaging of the imaging unit; a face direction specification unit that specifies a vertical orientation of the person's face detected by the face detection unit; a display direction determination unit that determines whether a vertical orientation of a screen display that is displayed on a display unit is the same orientation as the vertical orientation of the person's face specified by the face direction specification unit; and a display direction switch unit that switches the vertical orientation of the screen display that is displayed on the display unit to the same orientation as the vertical orientation of the person's face upon the display direction determination unit determining that the vertical orientation of the screen display that is displayed on the display unit and the vertical orientation of the person's face are not the same orientation.

A control method includes the steps of: computing a degree of change of a state of orientation detected by an orientation detection unit; determining whether the degree of change of the state of orientation of an information display device computed by the step of computing is equal to or more than a threshold; activating the imaging unit upon it being determined that the degree of change of the state of orientation of the information display device is equal to or more than the threshold in the step of determining the degree of change; detecting a person's face in an image obtained by imaging of the imaging unit; specifying a vertical orientation of the person's face detected in the step of detecting; determining whether a vertical orientation of a screen display that is displayed on a display unit is the same orientation as the vertical orientation of the person's face specified in the step of specifying; and switching the vertical orientation of the screen display that is displayed on the display unit to the same orientation as the vertical orientation of the person's face upon it being determined that the vertical orientation of the screen display that is displayed on the display unit and the vertical orientation of the person's face are not the same orientation in the step of determining the display direction.

A program according to a third aspect of the present invention causes an information display device to function as: an orientation change degree computation unit that computes a degree of change of a state of orientation detected by an orientation detection unit; an orientation change degree determination unit that determines whether the degree of change of the state of orientation of the information display device computed by the orientation change degree computation unit is equal to or more than a threshold; an image capture unit controller that activates the imaging unit upon the orientation change degree determination unit determining that the degree of change of the state of orientation of the information display device is equal to or more than the threshold; a face detection unit that detects a person's face in an image obtained by imaging of the imaging unit; a face direction specification unit that specifies a vertical orientation of the person's face detected by the face detection unit; a display direction determination unit that determines whether a vertical orientation of a screen display that is displayed on a display unit is the same orientation as the vertical orientation of the person's face specified by the face direction specification unit; and a display direction switch unit that switches the vertical orientation of the screen display that is displayed on the display unit to the same orientation as the vertical orientation of the person's face upon the display direction determination unit determining that the vertical orientation of the screen display that is displayed on the display unit and the vertical orientation of the person's face are not the same orientation.

As mentioned above, the summary of the invention des not recite all of the necessary characteristics of the present invention, and sub-combinations of the group of characteristics can also be the invention.

### Effect of the Invention

As is clear from the foregoing descriptions, this invention is able to substantially reduce the power consumption of an information display device that has a functionality that switches the orientation of a screen display according to the vertical orientation of the person's face compared to cases that utilize the techniques of the related technologies.

### BRIEF DESCRIPTION OF THE DRAWINGS

FIG. 1 is a diagram showing an example of a hardware configuration of a smartphone according to an exemplary embodiment of the present invention.
FIG. 2 is a diagram showing an example of a block configuration of a CPU shown in FIG. 1.
FIG. 3 is a diagram showing an example of an operational flow of the CPU shown in FIG. 1.
FIG. 4 is a diagram showing an example of a usage state of a smartphone of a related technology.
FIG. 5 is a diagram showing an example of a usage state of the smartphone of the related technology.
FIG. 6 is a diagram showing an example of a usage state ofthe smartphone of the related technology.
FIG. 7 is a diagram showing an example of a usage state of the smartphone of the related technology.
FIG. 8 is a diagram showing an example of a usage state of the smartphone of the related technology.

### EMBODIMENTS FOR CARRYING OUT THE INVENTION

Herein, an exemplary embodiment of the present invention is described, although the exemplary embodiment mentioned below is in no way limiting of the invention according to the claims. Furthermore, not all of the combinations of the characteristics described within the exemplary embodiment may be necessarily required for the solution means of the invention.

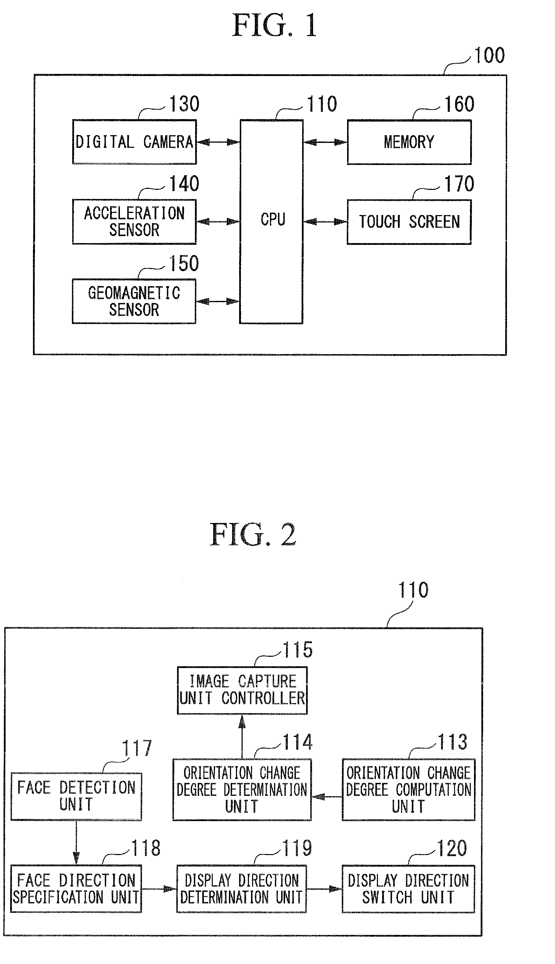

FIG. 1 shows an example of the hardware configuration of a smartphone 100 according to an exemplary embodiment of the present invention. The smartphone 100 is a mobile phone that combines the functionalities of a personal portable computer. To describe more specifically, the smartphone 100 is a device in which a mobile phone and communication functions are integrated into a portable information terminal of the related technologies. In particular, the smartphone 100 of the present exemplary embodiment has a function that switches the orientation of the screen display of information and displays the information according to the orientation of a person's face. The smartphone 100 may be an example of an "information display device" according to this exemplary embodiment.

The smartphone 100 includes a CPU (Central Processing Unit) 110, a digital camera 130, an acceleration sensor 140, a geomagnetic sensor 150, a memory 160, and a touch screen 170.

The CPU 110 is one of the components that configure the smartphone 100. The CPU 110 is a device that performs control of the digital camera 130, the acceleration sensor 140, the geomagnetic sensor 150, the memory 160, and the touch screen 170, and computation and processing of data. To describe more specifically, the CPU 110 is a device that executes a program stored in the memory 160. The CPU 110 receives data from the digital camera 130, the acceleration sensor 140, the geomagnetic sensor 150, the memory 160, and the touch screen 170, and upon computation and processing of the data thereof, outputs it to the memory 160 or the touch screen 170. The CPU 110 may be an example of a "controller" according to this exemplary embodiment.

The digital camera 130 is a device that converts an image to an electrical signal using a semiconductor device that reacts to light, such as a CCD (Charged Coupled Devices) or a CMOS (Complementary Metal Oxide Semiconductor), and stores it in the memory 160 as digital data. The digital camera 130 may be an example of an "imaging unit" according to this exemplary embodiment.

The acceleration sensor 140 is a device that detects the orientation of the gravitational acceleration, and is utilized for measuring the rotation angle of the vertical direction of the smartphone 100. The geomagnetic sensor 150 detects the orientation of the geomagnetism, and is utilized for computing the rotation angle of the horizontal direction of the smartphone 100. The acceleration sensor 140 and the geomagnetic sensor 150 may be an example of an "orientation detection unit" according to this exemplary embodiment.

The memory 160 is a device that stores data and programs within the smartphone 100. The touch screen 170 may be an example of a "display unit" according to this exemplary embodiment.

The touch screen 170 is a display whereby operation of the smartphone 100 can be performed by touching the screen with a finger or a dedicated pen.

In the present exemplary embodiment, a configuration in which the smartphone 100 including one CPU 110 is described with an object of preventing the description from becoming complicated. However, the smartphone 100 may include a plurality of CPUs 110.

FIG. 2 shows an example of a block configuration of the CPU 110. The CPU 110 includes an orientation change degree computation unit 113, an orientation change degree determination unit 114, an image capture unit controller 115, a face detection unit 117, a face direction specification unit 118, a display direction determination unit 119, and a display direction switch unit 120. Herein, the functions and the operations of the respective configuration elements are described.

The orientation change degree computation unit 113 computes the degree of change of the orientation of the gravitational acceleration. Furthermore, the orientation change degree computation unit 113 computes the degree of change of the orientation of the geomagnetism. For example, the orientation change degree computation unit 113 computes the degree of change of the orientation of the gravitational acceleration based on data whose input is received chronologically from the acceleration sensor 140. Moreover, for example, the orientation change degree computation unit 113 computes the degree of change of the orientation of the geomagnetism based on data whose input is received chronologically from the geomagnetic sensor 150. The orientation of the gravitational acceleration and the orientation of the geomagnetism may be an example of a "state of orientation" according to this exemplary embodiment.

The orientation change degree determination unit 114 determines whether or not the degree of change of the orientation of the gravitational acceleration is equal to or more than a threshold. Furthermore, the orientation change degree determination unit 114 determines whether or not the degree of change of the orientation of the geomagnetism is equal to or more than a threshold. For example, the orientation change degree determination unit 114 determines whether or not the degree of change of the orientation of the gravitational acceleration computed by the orientation change degree computation unit 113 is equal to or more than the threshold. Moreover, for example, the orientation change degree determination unit 114 determines whether or not the degree of change of the orientation of the geomagnetism computed by the orientation change degree computation unit 113 is the threshold. Furthermore, for example, the orientation change degree determination unit 114 determines that the degree of change of the orientation of the gravitational acceleration computed by the orientation change degree computation unit 113 is equal to or more than the threshold in a case where the degree of change of the orientation of the gravitational acceleration computed by the orientation change degree computation unit 113 becomes equal to or more than the threshold and thereafter the change in the degree of change thereof becomes less than a predetermined range. Moreover, for example, the orientation change degree determination unit 114 determines that the degree of change of the orientation of the geomagnetism computed by the orientation change degree computation unit 113 is equal to or more than the threshold in a case where the degree of change of the orientation of the geomagnetism computed by the orientation change degree computation unit 113 becomes equal to or more than the threshold and thereafter the change in the degree of change thereof becomes less than a predetermined ranged.

The image capture unit controller 115 activates the digital camera 130 in a case where the orientation of the gravitational acceleration has changed. Furthermore, the image capture unit controller 115 activates the digital camera 130 in a case where the orientation of the geomagnetism has changed. For example, the image capture unit controller 115 activates the digital camera 130 in a case where the orientation change degree determination unit 114 determines that the degree of change of the orientation of the gravitational acceleration is equal to or more than the threshold. Moreover, for example, the image capture unit controller 115 activates the digital camera 130 in a case where the orientation change degree determination unit 114 determines that the degree of change of the orientation of the geomagnetism is equal to or more than the threshold.

The face detection unit 117 detects the person's face in the image obtained by the imaging of the digital camera 130. For example, the face detection unit 117 detects the person's face in the image represented by the image data, the input of which is accepted from the digital camera 130.

The face direction specification unit 118 specifies the vertical orientation of the person's face. For example, the face direction specification unit 118 specifies the vertical orientation of the person's face detected by the face detection unit 117. Here, the vertical orientation of the person's face represents a vertical orientation when the parietal region represents up, and the jaw represents down. Therefore, even in a state in which the person is lying down as shown in FIG. 6, the vertical orientation of the person's face is specified as the vertical orientation when the parietal region represents up, and the jaw represents down.

The display direction determination unit 119 determines whether or not the vertical orientation of the screen display that is displayed on the touch screen 170 is the same orientation as the vertical orientation of the person's face. In other words, the display direction determination unit 119 determines whether or not the vertical orientation of the screen display that is displayed on the touch screen 170 is not the same as the vertical orientation of the person's face. For example, the display direction determination unit 119 determines whether or not the vertical orientation of the screen display that is displayed on the touch screen 170 is the same orientation as the vertical orientation of the person's face specified by the face direction specification unit 118.

The display direction switch unit 120 switches the vertical orientation of the screen display that is displayed on the touch screen 170 to the same orientation as the vertical orientation of the person's face. For example, in a case where the display direction determination unit 119 determines that the vertical orientation of the screen display that is displayed on the touch screen 170 differs from the vertical orientation of the person's face, the display direction switch unit 120 switches the vertical orientation of the screen display that is displayed on the touch screen 170 to the same orientation as the vertical orientation of the person's face.

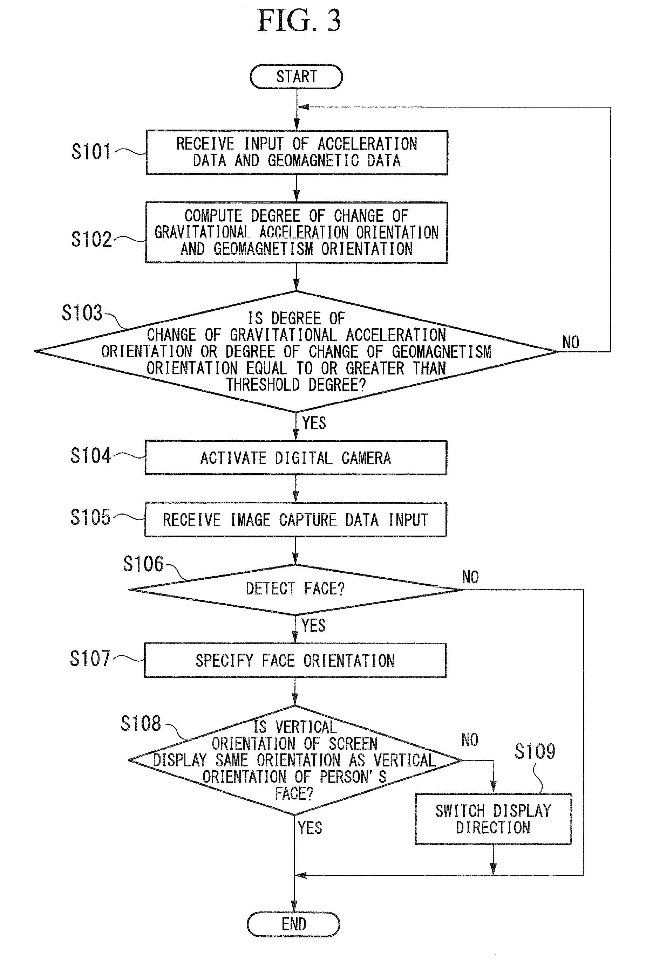

FIG. 3 shows an example of an operational flow of the CPU 110. This operational flow refers to both FIG. 1 and FIG. 2.

The acceleration sensor 140 chronologically outputs data representing the orientation of the gravitational acceleration to the CPU 110. Furthermore, the geomagnetic sensor 150 chronologically outputs data representing the orientation of the geomagnetism to the CPU 110.

When the orientation change degree computation unit 113 of the CPU 110 successively receives the data representing the orientation of the gravitational acceleration from the acceleration sensor 140 (S101), based on the data thereof, it computes the degree of change of the orientation of the gravitational acceleration (S102). Then, the orientation change degree computation unit 113 transmits the data representing the computed degree of change of the orientation of the gravitational acceleration to the orientation change degree determination unit 114.

In the same manner, when the orientation change degree computation unit 113 successively receives the data representing the orientation of the geomagnetism from the geomagnetic sensor 150 (S101), based on the data thereof, it computes the degree of change of the orientation of the geomagnetism (S102). Then, the orientation change degree computation unit 113 transmits the data representing the computed degree of change of the orientation of the geomagnetism to the orientation change degree determination unit 114.

When the orientation change degree determination unit 114 of the CPU 110 receives the data representing the degree of change of the orientation of the gravitational acceleration from the orientation change degree computation unit 113, it determines whether or not the degree of change of the orientation of the gravitational acceleration thereof is equal to or more than the threshold (S103). In that case, the orientation change degree determination unit 114 may determine that the degree of change of the orientation of the gravitational acceleration computed by the orientation change degree computation unit 113 has changed to or more than the threshold in a case where the degree of change of the orientation of the gravitational acceleration computed by the orientation change degree computation unit 113 becomes equal to or more than the threshold and thereafter the change in the degree of change thereof becomes less than a predetermined range.

In the same manner, when the orientation change degree determination unit 114 receives the data representing the degree of change of the orientation of the geomagnetism from the orientation change degree computation unit 113, it determines whether or not the degree of change of the orientation of the geomagnetism thereof is equal to or more than the threshold (S103). In that case, the orientation change degree determination unit 114 may determine that the degree of change of the orientation of the geomagnetism computed by the orientation change degree computation unit 113 is equal to or more than the threshold in a case where the degree of change of the orientation of the geomagnetism computed by the orientation change degree computation unit 113 becomes equal to or more than the threshold and thereafter the change in the change degree thereof becomes less than a predetermined range.

In a case where the orientation change degree determination unit 114 assesses that the degree of change of the orientation of the gravitational acceleration and the orientation of the geomagnetism is not more than the threshold (S103: No), the CPU 110 repeats the processing from step S101 to step S 103.

On the other hand, in a case where the orientation change degree determination unit 114 determines that the degree of change of the orientation of the gravitational acceleration is equal to or more than the threshold (S103: Yes), the image capture unit controller 115 ofthe CPU 110 activates the digital camera 130 (S104). In the same manner, in a case where the orientation change degree determination unit 114 determines that the degree of change of the orientation of the geomagnetism is equal to or more than the threshold (S103: Yes), the image capture unit controller 115 of the CPU 110 activates the digital camera 130 (S104).

In this manner, the digital camera 130 is activated, and outputs the image data obtained as a result of imaging by an imaging device, such as a CCD or a CMOS, to the CPU 110.

When the face detection unit 117 of the CPU 110 receives the image data from the digital camera 130 (S105), it detects the person's face in the image represented by the image data thereof (S106). In a case where the face detection unit 117 detects the person's face in the image (S106: Yes), it transmits data representing the position of the person's face that is detected in the image to the face direction specification unit 118. On the other hand, in a case where the face detection unit 117 does not detect the person's face in the image (S106: No), it does not perform any processing.

Then, when the face direction specification unit 118 of the CPU 110 receives the data representing the position of the person's face that is detected in the image from the face detection unit 117, it specifies the vertical orientation of the person's face (S107). Then, the face direction specification unit 118 transmits data representing the vertical orientation of the person's face that is specified to the display direction determination unit 119.

When the display direction determination unit 119 of the CPU 110 receives the data representing the vertical orientation of the person's face from the face direction specification unit 118, it determines whether or not the vertical orientation of the person's face represented by the data thereof and the vertical orientation of the screen display that is displayed on the touch screen 170 are the same orientation (S108). Then, the display direction determination unit 119 transmits data representing the determination result thereof to the display direction switch unit 120.

The display direction switch unit 120 of the CPU 110 receives the data representing the determination result from the display direction determination unit 119. In a case where the determination result represented by the data thereof is an determination result in which the vertical orientation of the person's face and the vertical orientation of the screen display that is displayed on the touch screen 170 are not the same orientation (S108: No), the display direction switch unit 120 switches the vertical orientation of the screen display that is displayed on the touch screen 170 to the same orientation as the vertical orientation of the person's face (S109). On the other hand, in a case where the determination result represented by the data received from the display direction determination unit 119 is an determination result in which the vertical orientation of the person's face and the vertical orientation of the screen display that is displayed on the touch screen 170 are the same orientation (S108: Yes), the display direction switch unit 120 does not perform any processing.

As described above, the smartphone 100, after the rotation angle in the horizontal direction or the vertical direction of the smartphone 100 body changes such that it exceeds the threshold, starts the digital camera 130 and begins imaging. Then, the smartphone 100 switches the orientation of the screen display such that the vertical orientation of the person's face in the image obtained by imaging and the vertical orientation of the screen display of the touch screen 170 become the same orientation.

In this manner, this exemplary embodiment is able to substantially reduce the power consumption of an information display device that has a functionality that switches the orientation of a screen display according to the vertical orientation of the person's face compared to cases that utilize the techniques of the related technologies.

The program that is provided to the smartphone 100 may be installed in the memory 160 via a network and executed in the CPU 110 for example. The program that is executed by being installed in the memory 160 makes the CPU 110 function as the orientation change degree computation unit 113, the orientation change degree determination unit 114, the image capture unit controller 115, the face detection unit 117, the face direction specification unit 118, the display direction determination unit 119, and the display direction switch unit 120.

The program that is provided to the smartphone 100 may be provided to the smartphone 100 from a storage device such as a hard disk or a RAM (Random Access Memory) provided in a server system that is connected to a dedicated communication network or the Internet via a network.

The program that is provided to the smartphone 100 may be stored in an external storage medium such as a flexible disk, or optical storage media including a CD-ROM (Compact Disk Read Only Memory), a DVD (Digital Versatile Disk), and a PD (Phese-change Dual), or in tape media, or a semiconductor memory including an IC (Integrated Circuit) card.

The foregoing exemplary embodiment has been described with respect to the case where the information display device is the smartphone 100, although it is in no way limited to this case. The information display device may be a portable-type gaming device, a notebook computer, and the like.

The foregoing exemplary embodiment has been described with respect to the case where the display device is the touch screen 170, although it is in no way limited to this case. The display device may be a liquid crystal display and the like.

The foregoing exemplary embodiment has been described with respect to an example in which the CPU 110 functions as the orientation change degree computation unit 113, the orientation change degree determination unit 114, the image capture unit controller 115, the face detection unit 117, the face direction specification unit 118, the display direction determination unit 119, and the display direction switch unit 120, although it is in no way limited to this case. A GPU (Graphics Processing Unit) or a DSP (Digital Signal Processor) may be made to have a portion, or all of, the functions among the respective processing units.

The foregoing has described the present invention with reference to the exemplary embodiment, although the present invention is in no way limited to the exemplary embodiment mentioned above. Various changes to the configurations or the details of the present invention that may be understood by those skilled in the art may be made within the scope of the present invention.

This application is based upon and claims the benefit of priority from Japanese patent application No. 2011-093811, filed April 20, 2011, the disclosure of which is incorporated herein in its entirety by reference.

### INDUSTRIAL APPLICABILITY

The present invention may be applied to an information display device, a control method that controls the information display device thereof, and a program for the information display device thereof.

### Reference Symbols

100 Smartphone
110 CPU
113 Orientation change degree computation unit
114 Orientation change degree determination unit
115 Image capture unit controller
117 Face detection unit
118 Face direction specification unit
119 Display direction determination unit
120 Display direction switch unit
130 Digital camera
140 Acceleration sensor
150 Geomagnetic sensor
160 Memory
170 Touch screen

## Claims

1. An information display device comprising:
an orientation change degree computation unit that computes a degree of change of a state of orientation detected by an orientation detection unit;
an orientation change degree determination unit that determines whether the degree of change of the state of orientation of the information display device computed by the orientation change degree computation unit is equal to or more than a threshold;
an image capture unit controller that activates the imaging unit upon the orientation change degree determination unit determining that the degree of change of the state of orientation of the information display device is equal to or more than the threshold;
a face detection unit that detects a person's face in an image obtained by imaging of the imaging unit;
a face direction specification unit that specifies a vertical orientation of the person's face detected by the face detection unit;
a display direction determination unit that determines whether a vertical orientation of a screen display that is displayed on a display unit is the same orientation as the vertical orientation of the person's face specified by the face direction specification unit; and
a display direction switch unit that switches the vertical orientation of the screen display that is displayed on the display unit to the same orientation as the vertical orientation of the person's face upon the display direction determination unit determining that the vertical orientation of the screen display that is displayed on the display unit and the vertical orientation of the person's face are not the same orientation.

2. The information display device according to claim 1, wherein the orientation degree of change determination unit determines that the degree of change of the state of orientation computed by the orientation degree of change computation unit is equal to or more than the threshold in a case where the degree of change of the state of orientation computed by the orientation degree of change computation unit becomes equal to or more than the threshold and thereafter a change in the degree of change becomes less than a predetermined range.

3. A control method comprising the steps of:
computing a degree of change of a state of orientation detected by an orientation detection unit;
determining whether the degree of change of the state of orientation of an information display device computed by the step of computing is equal to or more than a threshold;
activating the imaging unit upon it being determined that the degree of change of the state of orientation of the information display device is equal to or more than the threshold in the step of determining the degree of change;
detecting a person's face in an image obtained by imaging of the imaging unit;
specifying a vertical orientation of the person's face detected in the step of detecting;
determining whether a vertical orientation of a screen display that is displayed on a display unit is the same orientation as the vertical orientation ofthe person's face specified in the step of specifying; and
switching the vertical orientation ofthe screen display that is displayed on the display unit to the same orientation as the vertical orientation of the person's face upon it being determined that the vertical orientation of the screen display that is displayed on the display unit and the vertical orientation of the person's face are not the same orientation in the step of determining the display direction.

4. A program which causes an information display device to function as:
an orientation change degree computation unit that computes a degree of change of a state of orientation detected by an orientation detection unit;
an orientation change degree determination unit that determines whether the degree of change of the state of orientation of the information display device computed by the orientation change degree computation unit is equal to or more than a threshold;
an image capture unit controller that activates the imaging unit upon the orientation change degree determination unit determining that the degree of change of the state of orientation of the information display device is equal to or more than the threshold;
a face detection unit that detects a person's face in an image obtained by imaging of the imaging unit;
a face direction specification unit that specifies a vertical orientation of the person's face detected by the face detection unit;
a display direction determination unit that detennines whether a vertical orientation of a screen display that is displayed on a display unit is the same orientation as the vertical orientation of the person's face specified by the face direction specification unit; and
a display direction switch unit that switches the vertical orientation of the screen display that is displayed on the display unit to the same orientation as the vertical orientation of the person's face upon the display direction determination unit determining that the vertical orientation of the screen display that is displayed on the display unit and the vertical orientation of the person's face are not the same orientation.
